# EUROPEAN PATENT SPECIFICATION

(11) **EP 0 508 785 B1**
(45) Date of publication and mention of the grant of the patent: **29.11.2000**
(21) Application number: 92303178.5
(22) Date of filing: 09.04.1992
(51) Int. Cl.: H04N 5/265, H04N 5/278, H04N 5/272, H04N 5/275

(54) **Scrolling superimposition of generated title**
Abrollende Überlagerung von erzeugten Titeln
Superposition défilante de titre généré

(30) Priority: 11.04.1991 JP 7926891
(43) Date of publication of application: 14.10.1992
(73) Proprietor: CANON KABUSHIKI KAISHA, Tokyo (JP)
(72) Inventor: Nakatani, Yoshihiro, c/o Canon Kabushiki Kaisha, Ohta-ku, Tokyo (JP); Kawahara, Norihiro, c/o Canon Kabushiki Kaisha, Ohta-ku, Tokyo (JP)
(74) Representative: Beresford, Keith Denis Lewis

(56) References cited:
- EP-A- 0 326 327
- EP-A- 0 403 752
- WO-A-90/15502
- PATENT ABSTRACTS OF JAPAN vol. 10, no. 24 (E-377)3 January 1986 & JP-A-60 182 879 ( OLYMPUS KOGAKU KOGYO KK ) 18 September 1985

## Description

The present invention relates to an image signal processing apparatus for processing image signals.

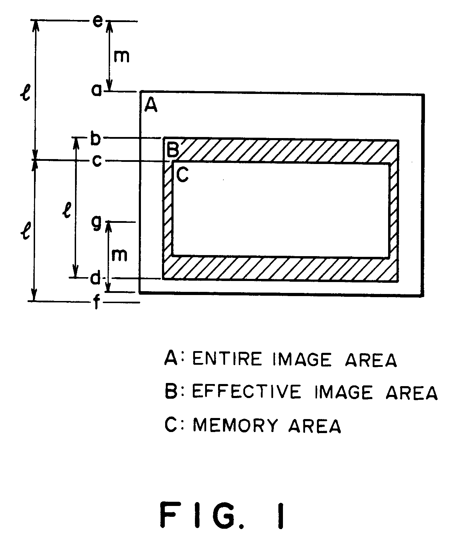

Digital superimposing circuit have been used in conventional image signal processing apparatus for processing image signals, such as a video tape recorder with a built-in camera. With this digital superimposing circuit, an image signal picked up with the camera is binarized and stored in a memory of the recorder, the binarized image signal stored in the memory is read and converted into a binarized image signal having desired color components, and this binarized image signal is superimposed on an input image signal picked up with the camera. The method of superimposing a binarized image signal stored in a memory includes a so-called scroll method of superimposing the binarized image to gradually display it on the display screen (hereinafter called scroll-in) and a method of superimposing the binarized image to gradually disappear it from the display screen (hereinafter called scroll-out). The area where the binarized image is displayed or from which it disappears (hereinafter this area is called a scroll control area) is the same as the memory area (an area indicated by C in Fig. 1).

Such a conventional digital superimposing circuit has the following disadvantages when the effective image area (an area indicated by B in Fig. 1) on the display screen is greater than the memory area.

The capacity of a general memory for storing binarized image signals is preferably 2's power bits so that it is 256 bits multiplied by n (n is a positive integer). The number of effective scan lines of an image signal conforming with the NTSC television system is 242.5 lines per one field. In this case, the capacity of 256 bits x n is sufficient for the NTSC television system, assuming that the binarized image signal of one horizontal scan line is n bits. On the other hand, the number of effective scan lines of an image signal conforming with the PAL television system is 287.5 lines per one field. Therefore, if the same memory having the capacity of 256 bits x n is used for storing image signals of both the NTSC and PAL television systems, the memory area for the latter system becomes small on the display screen in the vertical direction relative to the effective image area because the memory capacity for the PAL television system is insufficient.

If the above-described scroll operation is performed when the memory area is small relative to the effective image area, the binarized image is displayed or disappears only within or from the memory area. For example, in the case of the scroll-in on the display screen in the vertical direction, the lower portion of a binarized image first appears from the upper end of the memory area, and thereafter, the binarized image is displayed while gradually moving downward. This is unnatural display operation in the binarized image is displayed starting intermediately of the effective image area. In the case of the scroll-out, the binarized image does not disappear at the lower end of the effective image area, but disappears intermediately of the effective image area.

According to the present invention there is disclosed an image signal processing apparatus comprising input means operable to input an image signal corresponding to an input image area;
generating means operable to sample a luminance component of a selected frame of the input image signal, to form a binarized image signal therefrom and store the binarized luminance component of said selected frame in a memory element, the generating means being further operable to subsequently generate a title image signal of said selected frame by reading the binarized luminance component of said selected frame from the memory element, the title image signal of said selected frame being representative of a title image corresponding to a title image area smaller than the input image area;
timing control means operable to control the timing of the input image signal and the generating of the title image signal; and
multiplexing means operable to multiplex the title image signal of said selected frame with an input image signal subsequently input to said input means and to output an output image signal representative of the title image signal superimposed on the subsequently input image signal within an output image area which is smaller than the input image area and larger than the title image area;
characterised in that the timing control means comprises display control means operable to control a multiplexing position of the title image area relative to the input image area and operable in a scrolling mode to move the multiplexing position progressively between an outside position at which the title image area is outside of the output image area and an inside position at which the title image area is within the output image area;
the generating means being actuatable to generate the title image signal by a reset signal from the timing control means in respect of each frame of the image signal to generate the title image signal by reading the contents of the memory element commencing from the same start address of the memory element in respect of each frame of the image signal and at a time corresponding to the multiplexing position; and
the timing control means further comprising display inhibiting means operable to generate a control signal (KEY) defining a selected portion of each frame in which multiplexing is inhibited, the multiplexing means being responsive to the control signal so as to inhibit multiplexing of the title image signal with the input image signal during the selected portion of each frame to thereby prevent superimposing an unwanted portion of the title image area over the output image area due to overlapping of the title image area generated in respect of an adjacent frame.

Embodiments of the present invention will now be described with reference to the accompanying drawings in which:
Fig. 1 is a diagram showing the relation between an image display area on a display screen and an area where an image stored in a memory is displayed.
Fig. 2 is a block diagram showing the outline of an image signal processing apparatus according to an embodiment of the present invention.
Fig. 3 is a block diagram showing the detailed structure of the title generation circuit of the apparatus shown in Fig. 2.
Fig. 4 is a block diagram showing the detailed structure of the display control circuit of the title generation circuit shown in Fig. 3.

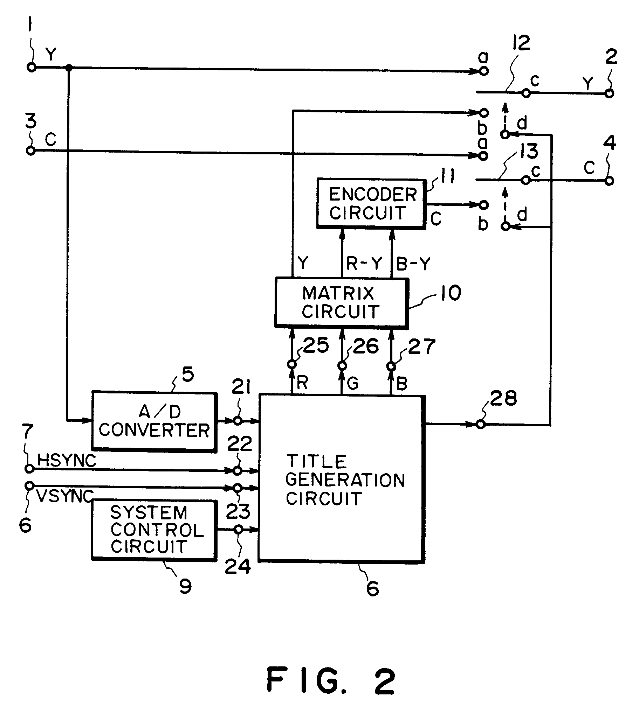

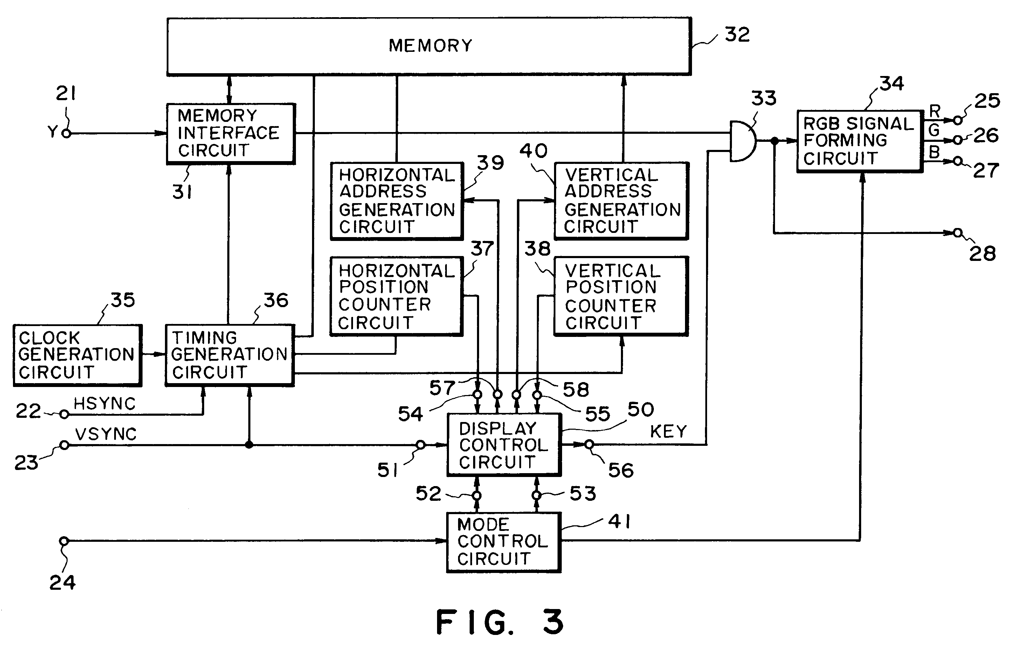

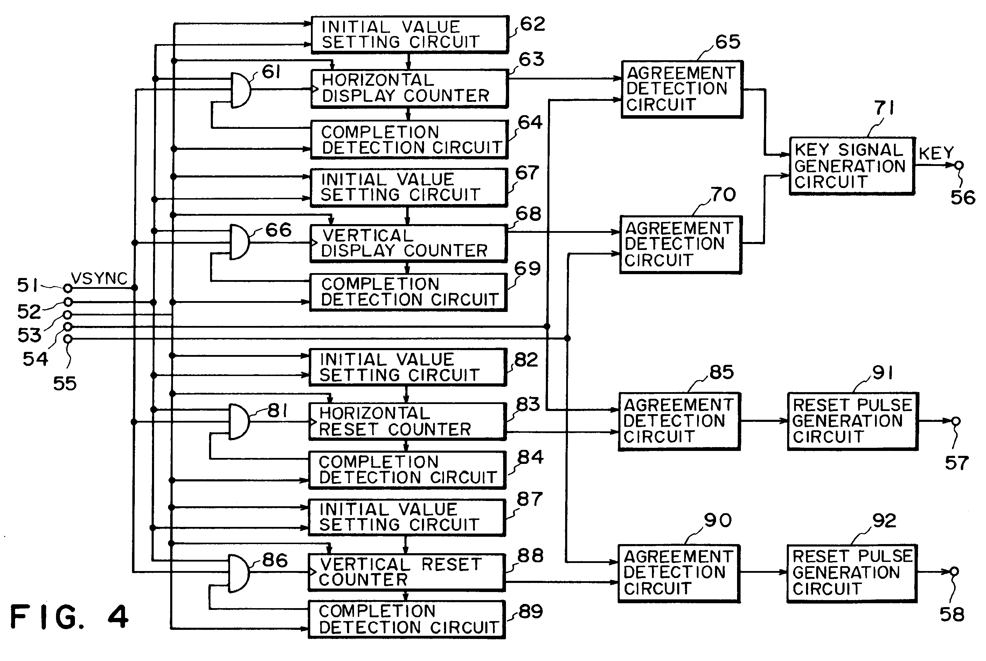

Figs. 2 to 4 show the structure of an image signal processing apparatus according to an embodiment of the present invention. Fig. 2 is a block diagram showing a digital superimposing circuit, Fig. 3 is a block diagram showing a title generation circuit of the digital superimposing circuit shown in Fig. 2, and Fig. 4 is a block diagram showing a display control circuit.

Referring to Fig. 2, a luminance signal Y of an input image signal is inputted to an input terminal 1, and outputted via contacts a and b of a switch 12 to an output terminal 2. A chrominance signal C of the input image signal is inputted to an input terminal 3, and outputted via contacts a and c of a switch 13 to an output terminal 4. The luminance signal Y inputted to the input terminal 1 is also inputted to an A/D converter 5 to be binarized, the binarized luminance signal Y being inputted via a terminal 21 to a title generation circuit 6.

The title generation circuit 6 generates R, G, and B signals corresponding to the three primary colors in accordance with the binarized luminance signal Y supplied from the A/D converter 5, the generated R, G, and B signals being outputted via respective terminals 25, 26, and 27 to a matrix circuit 10. The matrix circuit 10 generates a title luminance signal Y by using the inputted R, G, and B signals, and supplies it to a terminal b of the switch 12. The matrix circuit 10 also generates two title color difference signals (R - Y signal and B - Y signal), and supplies them to an encoder circuit 11.

The encoder circuit 11 modulates the inputted two title color difference signals R - Y and B - Y to generate a title chrominance signal C, and supplies it to a terminal b of the switch 13. At the same time when generating the R, G, and B title signals, the title generation circuit 6 generates a switching signal used for superimposing the title signals, the switching signal being supplied via a terminal 28 to terminals d of the switches 12 and 13. The switches 12 and 13 select either the luminance signal Y (by switch 12) and chrominance signal C (by switch 13) of the input image signal inputted to the contact a, or the title luminance signal Y (by switch 12) and title chrominance signal C (by switch 13) inputted to the contact b, in accordance with the polarity of the title switching signal. The selected signals Y and C are supplied to the corresponding contact c. In this manner, the title signal is superimposed on the input image signal.

A horizontal synchronizing signal (HSYNC) is inputted via an input terminal 7 and a terminal 22 to the title generation circuit 6, and a vertical synchronizing signal (VSYNC) is inputted via an input terminal 8 and a terminal 23 to the title generation circuit 6. The title generation circuit 6 controls the position of the title signal on the screen, and other necessary operations, by using these synchronizing signals. A control signal from a system control circuit 9 is inputted via a terminal 24 to the title generation circuit 6 to control the color of a title section and its display method.

The title generation circuit 6 will be described in detail with reference to Fig. 3 showing the block diagram thereof. In Fig. 3, the luminance signal Y binarized by the A/D converter shown in Fig. 2 is inputted to the terminal 21, and stored via a memory interface circuit 31 in a memory 32. In superimposing the title signal, the binarized luminance signal Y stored in the memory 32 is read and supplied via the memory interface circuit 31 to one input terminal of an AND gate 33.

An output signal of the AND gate 33 is inputted via the terminal 28 to the terminals d of the switches 12 and 13 shown in Fig. 2. In accordance with the polarity of this output signal, the superimposing operation is controlled. The output signal of the AND gate 33 is also supplied to an RGB signal forming circuit 34 which generates R, G, and B signals to be used for determining the color of a title signal, the R, G, and B signals being supplied via the terminals 25, 26, and 27 to the matrix circuit 10 shown in Fig. 2.

The memory interface circuit 31 and memory 32 are controlled by timing signals supplied from a timing generation circuit 36 to which supplied are a clock signal from a clock generation circuit 35 and the horizontal synchronizing signal (HSYNC) and vertical synchronizing signal (VSYNC) from the terminals 22 and 23. The timing generation circuit 36 supplies timing signals also to a horizontal position counter circuit 37 and vertical position counter circuit 38, both the circuits outputting count values representing the horizontal and vertical positions on the screen, to a display control circuit 50 via terminals 54 and 55.

The display control circuit 50 compares the count values inputted via the terminals 54 and 55 with the count values of counters (refer to the later description with Fig. 4) for counting the number of vertical synchronizing signals (VSYNC) inputted from the terminals 23 and 51, to thereby generate a key signal KEY which is supplied to the other input terminal of the AND gate 33 via a terminal 56. This key signal KEY is a signal for controlling the area on which a title is superimposed. While the polarity of this key signal KEY takes a high "H" level, the binarized signal itself read from the memory 32 is outputted as a title. Therefore, the title is superimposed at the area where the polarity of the binarized signal takes a high level "H", whereas the input image signal itself is outputted at the area where the binarized signal takes a low level "L". While the polarity of the key signal KEY takes a low level "L", the title is not superimposed, but the input image signal is outputted.

The display control circuit 50 further compares the count values of the horizontal and vertical position counter circuits 37 and 38 with the count values of counters (refer to the later description with Fig. 4) for providing the reset positions of horizontal and vertical addresses of the memory 32, to thereby generate address reset pulses and supply them to a horizontal address generation circuit 39 and vertical address generation circuit 40 respectively via terminals 57 and 58. In response to these reset pulses, the horizontal address generation circuit 39 and vertical address generation circuit 40 supply horizontal and vertical addresses to the memory 32 to control the position of a title on the screen.

The display control circuit 50 is supplied with mode control signal from a mode control circuit 41 via terminals 52 and 53. The mode control circuit 41 also supplies a control signal to the RGB forming circuit 34 to control the color of a title. The mode control circuit 41 is controlled by a control signal supplied via the terminal 24 from the system control circuit 9 shown in Fig. 2.

The characteristic features of the structure and operation of the display control circuit 50 of the image signal processing circuit constructed as above, will now be described with reference to Fig. 4 showing the block diagram of the display control circuit 50. In Fig. 4, the vertical synchronizing signal (VSYNC) inputted to the terminal 23 shown in Fig. 3 (input terminal 8 shown in Fig. 2) is inputted to the terminal 51 shown in Fig. 4. The vertical synchronizing signal (VSYNC) is inputted as clock signals to a horizontal display counter 63, vertical display counter 68, horizontal reset counter 83, and vertical reset counter 88, respectively via AND gates 61, 66, 81, and 86. These four counters count up or down the clocks signals, with initial count values being set by initial value setting circuits 62, 67, 82, and 87. The count values of these counters are inputted to completion detection circuits 64, 69, 84, and 89 the output signals of which are supplied to one input terminals of the AND gates 61, 66, 81, and 86. A control signal supplied via the terminal 52 from the mode control circuit 41 is inputted to other input terminals of the AND gates 61, 66, 81, and 86, the control signal determining whether a scroll operation is to be performed. This control signal is also supplied to the initial value setting circuits 62, 67, 82, and 87. In response to this control signal, the horizontal display counter 63, vertical display counter 68, horizontal reset counter 83, and vertical reset counter 88 are set with their initial values. The mode control signal is inputted from the mode control circuit 41 to the terminal 53. The mode control signal is also inputted to the initial value setting circuits 62, 67, 82, and 87 and to the completion detection circuits 64, 69, 84, and 89 to set them with their initial values and completion values. The mode control signal is further inputted to the horizontal display counter 63, vertical display counter 68, horizontal reset counter 83, and vertical reset counter 88, to determine the count up/down operation.

The outputs or count values of the horizontal display counter 63 and vertical display counter 68 are inputted to agreement detection circuits 65 and 70. The agreement detection circuits 65 and 70 are also supplied with the count values of the horizontal position counter circuit 37 and vertical position counter circuit 38 shown in Fig. 3, the count values representative of the positions on the screen being compared with the count values of the display counters 63 and 68. If there is an agreement, the agreement detection circuits output signals to a key signal generation circuit 71 which in turn outputs the key signal KEY. As described above, in accordance with the polarity of the key signal KEY, the area of superimposing a title is determined.

The outputs or count values of the horizontal reset counter 83 and vertical reset counter 88 are inputted to agreement detection circuits 85 and 90. The agreement detection circuits 85 and 90 are also supplied with the count values of the horizontal position counter circuit 37 and vertical position counter circuit 38 shown in Fig. 3, the count values representative of the positions on the screen being compared with the count values of the reset counters 83 and 88. If there is an agreement, the agreement detection circuits output signals to reset pulse generation circuits 91 and 92 which in turn output reset pulses from the terminals 57 and 58. As described above, in accordance with the reset pulses, the area of superimposing a title is determined.

Next, the operation of the image signal processing apparatus of this embodiment of the present invention will be described.

First, the mode control circuit 41 inputs a mode signal to the display control circuit 50 via the terminal 53. In response to this mode signal, the initial value setting circuit 87 sets the count value to the same as that of the vertical position counter circuit 38 obtained at a point e shown in Fig. 1. This point e is spaced apart from a point c at the upper end of the memory areas by a distance l in the vertical direction from the effective image area. The distance l is equal to the distance from a point b at the upper end of the effective image area in the vertical direction to a point d. The mode signal from the terminal 53 is also inputted to the vertical reset counter 88 which is set in this case to a count-up mode. The mode signal is also inputted to the completion detection circuit 89. The count value which is the same as that of the vertical position counter circuit 38 obtained at the point c shown in Fig. 1 is sat to the completion detection circuit 89. Namely, the completion detection circuit 89 is set to the count value corresponding to the upper end of the memory area. At the same time, an output of the completion detection circuit 89 takes the high level "H" which is sent to the AND gate 86.

Next, the mode control circuit 41 inputs a mode control signal indicating the start of a scroll operation to the display control circuit 50 via the terminal 52. The polarity of this mode control signal takes the high level "H" for starting the scroll operation, and the low level "L" for stopping the scroll operation.

The mode control signal is inputted to the initial value setting circuit 87 which in turn sets the initial value to the vertical reset counter 88. This initial value is the above-described value same as that of the vertical position counter circuit 38 obtained at the point e shown in Fig. 1. The mode control signal from the terminal 52 is also inputted to the AND gate 86 whose output takes the high level "H" when the scroll operation starts. As a result, inhibition of counting clock signals by the vertical reset counter 88 is released. The vertical synchronizing signal as the clock signal is inputted via the terminal 51 and AND gate 86 to the vertical reset counter 88. Since one vertical synchronizing signal as the clock signal is generated for each field, the vertical reset counter 88 counts up its count value for each field. As the count-up operation continues, the count value reaches the completion value set to the completion detection circuit 89. At this time, the completion detection circuit 89 takes the low level "L" to make the AND gate 86 enter in an inhibited state and stop the count-up operation of the vertical reset counter 88.

As described above, the completion detection circuit 89 is set as the completion value with the value same as that of the vertical position counter circuit 38 obtained at the point c shown in Fig. 1. Therefore, the count value of the vertical reset counter 88 moves from the point e to the point c shown in Fig. 1.

The count value of the vertical reset counter 88 and the count value of the vertical position counter circuit 38 from the terminal 55 are both inputted to the agreement detection circuit 90. When both the count values become coincident, the agreement detection circuit 90 generates a pulse signal which is supplied to the reset pulse generation circuit 92. Then, the reset pulse generating circuit 92 generates a reset pulse which is sent to the vertical address generation circuit 40 via the terminal 58. As a result, the vertical address of the memory 32 is reset. As described above, the count value of the vertical,reset counter 88 moves from the point e to the point c shown in Fig. 1, the reset position of the vertical address of the memory 32 moving gradually from the point e to the point c each time the field changes. Accordingly, the title image read from the memory 32 gradually lowers on the screen each time the field changes, and stops at the point c of the memory area shown in Fig. 1. In this manner, the title image scrolls in.

With the operation of only the above-described circuits, an unnecessary portion of a title image is displayed on the screen. The upper end of the memory area moves from the point e to the point c shown in Fig. 1 as described above. The point e is a virtual point and corresponds to a point g on the real image screen. The point g is spaced apart from the lower end of the entire image area by a distance m in the upward direction, the distance m being from the point e to the point a at the upper end of the entire image area. Therefore, the upper end of the memory area moves during the scroll-in from the point g, the point d, the lower end of the entire image area, and the point a, to the point c. During the scroll-in from the point g to the point d, the title image is displayed at the lower area of the screen. The operation of the circuits for inhibiting displaying such an unnecessary portion of the title image will be described below.

The mode signal inputted from the terminal 53 is also supplied to the initial value setting circuit 67. The initial value setting circuit 67 sets the count value same as that of the vertical position counter circuit 38 obtained at the point b shown in Fig. 1. Namely, the initial value setting circuit 67 sets the value representative of the upper end of the effective image area. The mode signal from the terminal 53 is also inputted to the vertical display counter 68 to set it to a count-up mode. The mode signal is also inputted to the completion detection circuit 69 to set the count value same as that of the vertical position counter circuit 38 obtained at the point d shown in Fig. 1. Namely, the completion detection circuit 69 is set with the counter value representative of the lower end of the effective image area. At this time, an output of the completion detection circuit 69 takes the high level "H" which is sent to the AND gate 66.

At this time, as described previously, the mode control signal indicating the start of the scroll operation is inputted from the mode control circuit 41 via the terminal 52. The polarity of the mode control signal takes the high level "H" for the start of the scroll operation, and the low level "L" for the stop thereof, as described previously. The mode control signal is inputted not only to the initial value setting circuit 87, but also to the initial value setting circuit 67. The initial value setting circuit 67 then loads the initial value to the vertical display counter 68. This initial value is the same as the count value of the vertical position counter circuit 38 obtained at the point b as described above. The mode control signal from the terminal 52 is also inputted to the AND gate 66 whose output takes the high level "H" when the scroll operation starts. As a result, inhibition of counting clock signals by the vertical display counter 68 is released. The vertical synchronizing signal as the clock signal is inputted via the terminal 51 and AND gate 66 to the vertical display counter 68. Since one vertical synchronizing signal as the clock signal is generated for each field, the vertical display counter 68 counts up its count value for each field. As the count-up operation continues, the count value reaches the completion value set to the completion detection circuit 69. At the same time, the completion detection circuit 69 takes the low level "L" to make the AND gate 66 enter in an inhibited state and stop the count-up operation of the vertical display counter 68. As described previously, the completion detection circuit 69 is set as the completion value with the count value same as that of the vertical position counter circuit 38 obtained at the point d shown in Fig. 1. As a result, the count value of the vertical display counter 68 moves from the upper end to the lower end of the effective image area.

The count value of the vertical display counter 68 and the count value of the vertical position counter circuit 38 from the terminal 55 are both inputted to the agreement detection circuit 70. When both the count values become coincident, the agreement detection circuit 70 generates a pulse signal which is supplied to the key signal generation circuit 71. Then, the key signal generation circuit 71 generates the key signal KEY which takes the high level "H" at the upper end of the entire image area, i.e., at the point a shown in Fig. 1, and takes the low leverl "L" in response to the output pulse signal from the agreement detection circuit 70. Therefore, the key signal KEY always takes the high level "H" at the upper end of the entire image area for each field, and takes the low level "L" to gradually move from the upper end to the lower end of the effective image area for each field.

The key signal KEY is sent to the AND gate 33 via the terminal 56. As described previously, the AND gate 33 outputs the title image while the polarity of the key signal KEY takes the high level "H", and inhibits outputting the title image to output the input image signal while it takes the low level "L". With the above-described operation, an unnecessary portion of the title image is not displayed, but the lower portion of the title image first appears at the upper end of the effective image area, and thereafter, the title image gradually lowers to expand the area on which the title image is displayed.

In the upward scroll-in operation in the vertical direction, the vertical reset counter 88 changes its count value from the point f to the point c shown in Fig. 1, and the vertical display counter 68 changes its count value from the point d to the point b shown in Fig. 1. In this case, therefore, the upper portion of the title image first appears at the lower end of the effective image area, and thereafter, the title image gradually rises to expand the area on which the title image is displayed. In the scroll-out operation, the title image disappears at the end of the effective image area.

In the above embodiment, the vertical synchronizing signal (VSYNC) has been used as the clock signal inputted to the terminal 51 and supplied to the horizontal and vertical display counters 63 and 68 and horizontal and vertical reset counters 83 and 88. As such clock signals, signals obtained by frequency-dividing the vertical synchronizing signal (VSYNC) or signals outputted from a microcomputer may also be used. In this manner, the transition time for the scroll operation can be set as desired.

As described so far, according to the image signal processing apparatus of the present invention, the scroll operation can be performed using the entire area of the effective image area. Therefore, even if the memory area is small relative to the effective image area, the scroll operation can be smoothly performed moving between opposite ends of the screen.

## Claims

1. An image signal processing apparatus comprising input means (1, 3) operable to input an image signal corresponding to an input image area (A);
generating means (6) operable to sample a luminance component of a selected frame of the input image signal, to form a binarized image signal therefrom and store the binarized luminance component of said selected frame in a memory element (32), the generating means being further operable to subsequently generate a title image signal of said selected frame by reading the binarized luminance component of said selected frame from the memory element, the title image signal of said selected frame being representative of a title image corresponding to a title image area (C) smaller than the input image area;
timing control means (36-40) operable to control the timing of the input image signal and the generating of the title image signal; and
multiplexing means (12, 13) operable to multiplex the title image signal of said selected frame with an input image signal subsequently input to said input means and to output an output image signal representative of the title image signal superimposed on the subsequently input image signal within an output image area (B) which is smaller than the input image area and larger than the title image area;
characterised in that the timing control means comprises display control means (50) operable to control a multiplexing position (e; c) of the title image area relative to the input image area and operable in a scrolling mode to move the multiplexing position progressively between an outside position (e) at which the title image area is outside of the output image area and an inside position (c) at which the title image area is within the output image area;
the generating means being actuatable to generate the title image signal by a reset signal from the timing control means in respect of each frame of the image signal to generate the title image signal by reading the contents of the memory element commencing from the same start address of the memory element in respect of each frame of the image signal and at a time corresponding to the multiplexing position; and
the timing control means further comprising display inhibiting means (71) operable to generate a control signal (KEY) defining a selected portion of each frame in which multiplexing is inhibited, the multiplexing means being responsive to the control signal so as to inhibit multiplexing of the title image signal with the input image signal during the selected portion of each frame to thereby prevent superimposing an unwanted portion of the title image area over the output image area due to overlapping of the title image area generated in respect of an adjacent frame.

2. Apparatus as claimed in claim 1 wherein the memory element has a storage capacity of one frame corresponding to the title image area and smaller than a storage capacity corresponding to the output image area.

3. Apparatus as claimed in any preceding claim wherein the timing control means comprises counting means (37, 38) operable to count clock pulses synchronised with each frame of the image signal whereby in each frame respective horizontal and vertical count values are representative of horizontal and vertical positions in the input image area;
the display control means comprising a reset counter (88) containing a first count value defining the multiplexing position and further comprising reset signal generating means (90, 92) operable to generate the reset signal when the vertical count value is equal to the first count value.

4. Apparatus as claimed in claim 3 wherein the display control means comprises means for incrementing the first count value in the reset counter at each frame to effect scrolling, thereby being operable to move the multiplexing position progressively by a predetermined distance at each frame.

5. Apparatus as claimed in claim 4 wherein the display control means comprises a display counter (68) containing a second count value defining the extent of the selected portion of each frame in which superimposition is prevented, the display inhibiting means being operable to generate the control signal (KEY) when the vertical count value is equal to the second count value; and wherein the display control means comprises means for incrementing the second count value during scrolling to vary the extent of the selected portion by the predetermined distance at each frame.

6. Apparatus as claimed in any preceding claim wherein the image signal is in the form of a luminance signal (Y) and a chrominance signal (C), the generating means being operable to convert the sampled frame of the input signal to colour signals (R, G, B) in digital form to constitute the binarized image signal, the generating means being further operable to read the binary image signal from the memory element and convert the colour signals into luminance and chrominance signals corresponding in form to the input image signal, whereby the multiplexing means is operable to multiplex the luminance and chrominance signal of the input image signal with the luminance and chrominance signals of the title image signal.

7. Apparatus as claimed in claim 6 wherein the multiplexing means is operable to selectively output either the image signal luminance and chrominance signals or the title image signal luminance and chrominance signals respectively, the multiplexing means being operable to output the title image signals in response to a multiplexing control signal (28), and the display control means being operable to generate the multiplexing control signal whenever the title image signal is read from the memory element unless inhibited by the control signal (KEY) generated by the display inhibiting means.

8. A method of image signal processing comprising the steps of inputting an image signal corresponding to an input image area (A);
sampling a luminance component of a selected frame of the input image signal, forming a binarized image signal therefrom and storing the binarized luminance component of said selected frame in a memory element (32), subsequently generating a title image signal of said selected frame by reading the binarised luminance component of said selected frame from the memory element, the title image signal of said selected frame being representative of a title image corresponding to a title image area (C) smaller than the input image area;
controlling the timing of the input image signal and the generating of the title image signal; and
multiplexing the title image signal of said selected frame with an input image signal subsequently input to said input means and outputting an output image signal representative of the title image signal superimposed on the subsequently input image signal within an output image area (B) which is smaller than the input image area and larger than the title image area;
characterised in that the timing controlling step comprises controlling a multiplexing position (e; c) of the title image area relative to the input image area and, in a scrolling mode, moving the multiplexing position progressively between an outside position (e) at which the title image area is outside of the output image area and an inside position (c) at which the title image area is within the output image area;
controlling the timing of generating the title image signal by a reset signal in respect of each frame of the image signal to initiate generation of the title image signal by reading the contents of the memory element commencing from the same start address of the memory element in respect of each frame of the image signal and at a time corresponding to the multiplexing position; and
controlling the timing of generating a control signal (KEY) for inhibiting multiplexing of the title image signal with the input image signal during a selected portion of each frame so as to prevent superimposing an unwanted portion of the title image area over the output image area due to overlapping of the title image area generated in respect of an adjacent frame.

9. A method as claimed in claim 9 wherein the memory element has a storage capacity of one frame corresponding to the title image area and smaller than a storage capacity corresponding to the output image area.

10. A method as claimed in any of the claims 8 and 9 wherein the timing is controlled by counting clock pulses synchronised with each frame of the image signal whereby in each frame respective horizontal and vertical count values are representative of horizontal and vertical positions in the input image area;
the multiplexing position being controlled by means of a reset counter (88) containing a first count value defining the multiplexing position and a reset signal generating means (90, 92) generating the reset signal when the vertical count value is equal to the first count value.

11. A method as claimed in claim 10 wherein the first count value is incremented at each frame to effect scrolling, thereby moving the multiplexing position progessively by a predetermined distance at each frame.

12. A method as claimed in claim 11 wherein the inhibition of unwanted superimposition is controlled by means of a display counter (68) containing a second count value defining the extent of the selected portion of each frame in which superimposition is prevented, the control signal (KEY) being generated when the vertical count value is equal to the second count value; and the second count value being incremented during scrolling to vary the extent of the selected portion by the predetermined distance at each frame.

13. A method as cliamed in any of claims 8 to 12 wherein the image signal is in the form of a luminance signal (Y) and a chrominance signal (C), the sampled frame of the input signal being converted to colour signals (R, G, B) in digital form to constitute the binarized image signal, the binary image signal being read from the memory element and the colour signals converted into luminance and chrominance signals corresponding in form to the input image signal, whereby the multiplexing step comprises multiplexing the luminance and chrominance signal of the input image signal with the luminance and chrominance signals of the title image signal.

14. A method as claimed in claim 13 wherein the multiplexing step selectively outputs either the image signal luminance and chrominance signals or the title image signal luminance and chrominance signals respectively, the multiplexing step outputting the title image signals in response to a multiplexing control signal (28), and the multiplexing control signal being generated whenever the title image signal is read from the memory element unless inhibited by the control signal (KEY) for inhibiting superimposition.

## Patentansprüche

1. Bildsignalverarbeitungsvorrichtung mit
einer Eingabeeinrichtung (1, 3), die zur Eingabe eines einem Eingabebildbereich (A) entsprechenden Bildsignals betreibbar ist,
einer Erzeugungseinrichtung (6), die zur Abtastung einer Luminanzkomponente eines ausgewählten Rahmens des Eingabebildsignals zur Erzeugung eines binarisierten Bildsignals daraus und Speicherung der binarisierten Luminanzkomponente des ausgewählten Rahmens in einem Speicherelement (32) betreibbar ist, wobei die Erzeugungseinrichtung ferner zur anschließenden Erzeugung eines Titelbildsignals des ausgewählten Rahmens durch Lesen der binarisierten Luminanzkomponente des ausgewählten Rahmens aus dem Speicherelement betreibbar ist, wobei das Titelbildsignal des ausgewählten Rahmens ein einem Titelbildbereich (C), der kleiner als der Eingabebildbereich ist, entsprechendes Titelbild darstellt,
einer Zeitablaufsteuerungseinrichtung (36-40), die zur Steuerung des Zeitablaufs des Eingabebildsignals und der Erzeugung des Titelbildsignals betreibbar ist, und
einer Multiplexeinrichtung (12, 13), die zum Multiplexen des Titelbildsignals des ausgewählten Rahmens mit einem anschließend in die Eingabeeinrichtung eingegebenen Eingabebildsignal und zur Ausgabe eines Ausgabebildsignals, das das dem anschließenden Eingabebildsignal überlagerte Titelbildsignal darstellt, in einem Ausgabebildbereich (B), der kleiner als der Eingabebildbereich und größer als der Titelbildbereich ist, betreibbar ist,
**dadurch gekennzeichnet**, **daß**
die Zeitablaufsteuerungseinrichtung eine Anzeigesteuerungseinrichtung (50) aufweist, die zur Steuerung einer Multiplexposition (e; c) des Titelbildbereichs relativ zu dem Eingabebildbereich betreibbar ist und in einer Rollbetriebsart zur stufenweisen Bewegung der Multiplexposition zwischen einer Außenposition (e), an der der Titelbildbereich sich außerhalb des Ausgabebildbereichs befindet, und einer Innenposition (c), an der der Titelbildbereich sich innerhalb des Ausgabebildbereichs befindet, betreibbar ist,
die Erzeugungseinrichtung zur Erzeugung des Titelbildsignals durch ein Rücksetzsignal von der Zeitablaufsteuerungseinrichtung bezüglich jedes Rahmens des Bildsignals betätigbar ist, um das Titelbildsignal durch Lesen der Inhalte des Speicherelements, die bei der gleichen Startadresse des Speicherelements bezüglich jedes Rahmens des Bildsignals beginnen, und zu einer der Multiplexposition entsprechenden Zeit zu erzeugen, und
die Zeitablaufsteuerungseinrichtung ferner eine Anzeigesperrungseinrichtung (71) aufweist, die zur Erzeugung eines Steuerungssignals (KEY) betreibbar ist, das einen ausgewählten Abschnitt jedes Rahmens definiert, in dem das Multiplexen gesperrt ist, wobei die Multiplexeinrichtung auf das Steuerungssignal reagiert, so daß das Multiplexen des Titelbildsignals mit dem Eingabebildsignal während des ausgewählten Abschnitts jedes Rahmens gesperrt ist, um dadurch eine durch eine bezüglich eines angrenzenden Rahmens erzeugte Überlappung des Titelbildbereichs verursachte Überlagerung eines unerwünschten Abschnitts des Titelbildbereichs über den Ausgabebildbereich zu verhindern.

2. Vorrichtung nach Anspruch 1, wobei das Speicherelement eine Speicherkapazität eines dem Titelbildbereich entsprechenden Rahmens aufweist, die kleiner als eine dem Ausgabebildbereich entsprechende Speicherkapazität ist.

3. Vorrichtung nach einem der vorstehenden Ansprüche, wobei
die Zeitablaufsteuerungseinrichtung eine Zähleinrichtung (37, 38) aufweist, die zur Zählung von Taktimpulsen synchron zu jedem Rahmen des Bildsignals betreibbar ist, wodurch bei jedem Rahmen jeweilige horizontale und vertikale Zählwerte horizontale und vertikale Positionen in dem Eingabebildbereich darstellen,
die Anzeigesteuerungseinrichtung einen Rücksetzzähler (88) aufweist, der einen die Multiplexposition definierenden ersten Zählwert enthält, und ferner eine Rücksetzsignalerzeugungseinrichtung (90, 92) aufweist, die zur Erzeugung des Rücksetzsignals, wenn der vertikale Zählwert gleich dem ersten Zählwert ist, betreibbar ist.

4. Vorrichtung nach Anspruch 3, wobei die Anzeigesteuerungseinrichtung eine Einrichtung zur Erhöhung des ersten Zählwerts in dem Rücksetzzähler bei jedem Rahmen zur Ausführung eines Rollens aufweist, wodurch sie zur stufenweisen Bewegung der Multiplexposition um eine vorbestimmte Entfernung bei jedem Rahmen betreibbar ist.

5. Vorrichtung nach Anspruch 4, wobei die Anzeigesteuerungseinrichtung einen Anzeigezähler (68) aufweist, der einen die Ausdehnung des ausgewählten Abschnitts jedes Rahmens, in dem die Überlagerung verhindert ist, definierenden zweiten Zählwert enthält, wobei die Anzeigesperrungseinrichtung zur Erzeugung des Steuerungssignals (KEY), wenn der vertikale Zählwert gleich dem zweiten Zählwert ist, betreibbar ist, und wobei die Anzeigesteuerungseinrichtung eine Einrichtung zur Erhöhung des zweiten Zählwerts während des Rollens zur Veränderung der Ausdehnung des ausgewählten Abschnitts um eine vorbestimmte Entfernung bei jedem Rahmen aufweist.

6. Vorrichtung nach einem der vorstehenden Ansprüche, wobei das Bildsignal in Form eines Luminanzsignals (Y) und eines Chrominanzsignals (C) vorliegt, die Erzeugungseinrichtung zur Wandlung des abgetasteten Rahmens des Eingabesignals in Farbsignale (R, G, B) in digitaler Form zur Bildung des binarisierten Bildsignals betreibbar ist, die Erzeugungseinrichtung ferner zum Lesen des binären Bildsignals aus dem Speicherelement und zur Wandlung der Farbsignale in in der Form dem Eingabebildsignal entsprechende Luminanz- und Chrominanzsignale betreibbar ist, wodurch die Multiplexeinrichtung zum Multiplexen des Luminanz- und Chrominanzsignals des Eingabebildsignals mit den Luminanz- und Chrominanzsignalen des Titelbildsignals betreibbar ist.

7. Vorrichtung nach Anspruch 6, wobei die Multiplexeinrichtung zur selektiven Ausgabe entweder jeweils der Bildsignal-Luminanzsignale und Bildsignal-Chrominanzsignale oder der Titelbildsignal-Luminanzsignale und Titelbildsignal-Chrominanzsignale betreibbar ist, die Multiplexeinrichtung zur Ausgabe der Titelbildsignale in Reaktion auf ein Multiplexsteuerungssignal (28) betreibbar ist und die Anzeigesteuerungseinrichtung zur Erzeugung des Multiplexsteuerungssignals immer wenn das Titelbildsignal aus dem Speicherelement gelesen wird, sofern es nicht durch das von der Anzeigesperrungseinrichtung erzeugte Steuerungssignal (KEY) gesperrt ist, betreibbar ist.

8. Verfahren der Bildsignalverarbeitung mit den Schritten
Eingeben eines einem Eingabebildbereich (A) entsprechenden Bildsignals,
Abtasten einer Luminanzkomponente eines ausgewählten Rahmens des Eingabebildsignals, Erzeugen eines binarisierten Bildsignals daraus und Speichern der binarisierten Luminanzkomponente des ausgewählten Rahmens in einem Speicherelement (32), anschließendem Erzeugen eines Titelbildsignals des ausgewählten Rahmens durch Lesen der binarisierten Luminanzkomponente des ausgewählten Rahmens aus dem Speicherelement, wobei das Titelbildsignal des ausgewählten Rahmens ein einem Titelbildbereich (C), der kleiner als der Eingabebildbereich ist, entsprechendes Titelbild darstellt,
Steuern des Zeitablaufs des Eingabebildsignals und der Erzeugung des Titelbildsignals, und
Multiplexen des Titelbildsignals des ausgewählten Rahmens mit einem anschließend in die Eingabeeinrichtung eingegebenen Eingabebildsignal und Ausgeben eines Ausgabebildsignals, das das dem anschließenden Eingabebildsignal überlagerte Titelbildsignal darstellt, in einem Ausgabebildbereich (B), der kleiner als der Eingabebildbereich und größer als der Titelbildbereich ist,
**dadurch gekennzeichnet**, **daß**
der Zeitablaufsteuerungsschritt ein Steuern einer Multiplexposition (e; c) des Titelbildbereichs relativ zu dem Eingabebildbereich und in einer Rollbetriebsart ein stufenweises Bewegen der Multiplexposition zwischen einer Außenposition (e), an der der Titelbildbereich sich außerhalb des Ausgabebildbereichs befindet, und einer Innenposition (c), an der der Titelbildbereich sich innerhalb des Ausgabebildbereichs befindet, aufweist,
der Zeitablauf der Erzeugung des Titelbildsignals durch ein Rücksetzsignal bezüglich jedes Rahmens des Bildsignals gesteuert wird, um die Erzeugung des Titelbildsignals durch Lesen der Inhalte des Speicherelements, die bei der gleichen Startadresse des Speicherelements bezüglich jedes Rahmens des Bildsignals beginnen, und zu einer der Multiplexposition entsprechenden Zeit einzuleiten, und
der Zeitablauf der Erzeugung eines Steuerungssignals (KEY) zum Sperren des Multiplexens des Titelbildsignals mit dem Eingabebildsignal während eines ausgewählten Abschnitts jedes Rahmens gesteuert wird, so daß eine durch eine bezüglich eines angrenzenden Rahmens erzeugte Überlappung des Titelbildbereichs verursachte Überlagerung eines unerwünschten Abschnitts des Titelbildbereichs über den Ausgabebildbereich verhindert wird.

9. Verfahren nach Anspruch 8, wobei das Speicherelement eine Speicherkapazität eines dem Titelbildbereich entsprechenden Rahmens aufweist, die kleiner als eine dem Ausgabebildbereich entsprechende Speicherkapazität ist.

10. Verfahren nach Anspruch 8 oder 9, wobei
der Zeitablauf durch Zählen von Taktimpulsen synchron zu jedem Rahmen des Bildsignals gesteuert wird, wodurch bei jedem Rahmen jeweilige horizontale und vertikale Zählwerte horizontale und vertikale Positionen in dem Eingabebildbereich darstellen,
die Multiplexposition durch einen Rücksetzzähler (88), der einen die Multiplexposition definierenden ersten Zählwert enthält, und eine Rücksetzsignalerzeugungseinrichtung (90, 92), die das Rücksetzsignal erzeugt, wenn der vertikale Zählwert gleich dem ersten Zählwert ist, gesteuert wird.

11. Verfahren nach Anspruch 10, wobei der erste Zählwert zum Ausführen eines Rollens bei jedem Rahmen erhöht wird, wodurch die Multiplexposition bei jedem Rahmen um eine vorbestimmte Entfernung stufenweise bewegt wird.

12. Verfahren nach Anspruch 11, wobei das Sperren der unerwünschten Überlagerung durch einen Anzeigezähler (68) gesteuert wird, der einen die Ausdehnung des ausgewählten Abschnitts jedes Rahmens, in dem die Überlagerung verhindert wird, definierenden zweiten Zählwert enthält, wobei das Steuerungssignal (KEY) erzeugt wird, wenn der vertikale Zählwert gleich dem zweiten Zählwert ist, und wobei der zweite Zählwert während des Rollens zum Verändern der Ausdehnung des ausgewählten Abschnitts um eine vorbestimmte Entfernung bei jedem Rahmen erhöht wird.

13. Verfahren nach einem der Ansprüche 8 bis 12, wobei das Bildsignal in Form eines Luminanzsignals (Y) und eines Chrominanzsignals (C) vorliegt, der abgetastete Rahmen des Eingabesignals in Farbsignale (R, G, B) in digitaler Form zum Bilden des binarisierten Bildsignals gewandelt wird, das binäre Bildsignal aus dem Speicherelement gelesen wird und die Farbsignale in in der Form dem Eingabebildsignal entsprechende Luminanz- und Chrominanzsignale gewandelt werden, wodurch der Multiplexschritt ein Multiplexen des Luminanz- und Chrominanzsignals des Eingabebildsignals mit den Luminanz- und Chrominanzsignalen des Titelbildsignals aufweist.

14. Verfahren nach Anspruch 13, wobei der Multiplexschritt entweder jeweils die Bildsignal-Luminanzsignale und Bildsignal-Chrominanzsignale oder die Titelbildsignal-Luminanzsignale und Titelbildsignal-Chrominanzsignale selektiv ausgibt, der Multiplexschritt die Titelbildsignale in Reaktion auf ein Multiplexsteuerungssignal (28) ausgibt und das Multiplexsteuerungssignal immer wenn das Titelbildsignal aus dem Speicherelement gelesen wird, sofern es nicht durch das Steuerungssignal (KEY) zum Sperren der Überlagerung gesperrt wird, erzeugt wird.

## Revendications

1. Appareil de traitement de signal d'image, comprenant un moyen d'entrée (1, 3) destiné à fournir en entrée un signal d'image correspondant à une zone d'image d'entrée (A) ;
un moyen générateur (6) destiné à échantillonner une composante de luminance d'une trame sélectionnée du signal d'image d'entrée, pour former à partir de celui-ci un signal d'image binarisé et stocker la composante de luminance binarisée de ladite trame sélectionnée dans un élément à mémoire (32), le moyen générateur étant en outre destiné à générer ultérieurement un signal d'image de titre de ladite trame sélectionnée en lisant la composante de luminance binarisée de ladite trame sélectionnée dans l'élément à mémoire, le signal d'image de titre de ladite trame sélectionnée étant représentatif d'une image du titre correspondant à une zone d'image de titre (C) plus petite que la zone d'image d'entrée ;
un moyen de commande de cadencement (36-40) destiné à commander le cadencement du signal d'image d'entrée et la génération du signal d'image de titre ; et
un moyen de multiplexage (12, 13) destiné à multiplexer le signal d'image de titre de ladite trame sélectionnée avec un signal d'image d'entrée fourni ultérieurement en entrée audit moyen d'entrée et pour fournir en sortie un signal d'image de sortie représentatif du signal d'image de titre superposé au signal d'image fourni en entrée ultérieurement à l'intérieur d'une zone d'image de sortie (B) qui est plus petite que la zone d'image d'entrée et plus grande que la zone d'image de titre ;
caractérisé en ce que le moyen de commande de cadencement comprend un moyen de commande d'affichage (50) destiné à commander une position de multiplexage (e ; c) de la zone d'image de titre par rapport à la zone d'image d'entrée et pouvant être mis en fonctionnement dans un mode défilant pour déplacer progressivement la position de multiplexage entre une position extérieure (e) à laquelle la zone d'image de titre est à l'extérieur de la zone d'image de sortie et une position intérieure (c) à laquelle la zone d'image de titre est à l'intérieur de la zone d'image de sortie ;
le moyen générateur pouvant être activé pour générer le signal d'image de titre par un signal de remise à zéro provenant du moyen de commande de cadencement pour chaque trame du signal d'image afin de générer le signal d'image de titre en lisant le contenu de l'élément à mémoire en commençant à la même adresse de départ de l'élément à mémoire pour chaque trame du signal d'image et à un instant correspondant à la position de multiplexage ; et
le moyen de commande de cadencement comprenant en outre un moyen d'inhibition de l'affichage (71) destiné à générer un signal de commande (CLÉ) définissant une partie sélectionnée de chaque trame dans laquelle le multiplexage est inhibé, le moyen de multiplexage étant sensible au signal de commande de façon à inhiber un multiplexage du signal d'image de titre avec le signal d'image d'entrée pendant la partie sélectionnée de chaque trame afin d'empêcher ainsi une superposition d'une partie indésirable de la zone d'image de titre sur la zone d'image de sortie du fait d'un chevauchement de la zone d'image de titre générée pour une trame adjacente.

2. Appareil selon la revendication 1, dans lequel l'élément à mémoire a une capacité de stockage d'une trame correspondant à la zone d'image de titre et plus petite qu'une capacité de stockage correspondant à la zone d'image de sortie.

3. Appareil selon l'une quelconque des revendications précédentes, dans lequel le moyen de commande de cadencement comprend un moyen de comptage (37, 38) destiné à compter des impulsions d'horloge synchronisées avec chaque trame du signal d'image, de sorte que dans chaque trame, des valeurs de comptage horizontales et verticales respectives sont représentatives de positions horizontales et verticales dans la zone d'image d'entrée ;
le moyen de commande d'affichage comprenant un compteur à remise à zéro (88) contenant une première valeur de comptage définissant la position de multiplexage et comprenant en outre un moyen générateur de signal de remise à zéro (90, 92) destiné à générer le signal de remise à zéro lorsque la valeur de comptage verticale est égale à la première valeur de comptage.

4. Appareil selon la revendication 3, dans lequel le moyen de commande d'affichage comprend un moyen pour incrémenter la première valeur de comptage dans le compteur à remise à zéro lors de chaque trame pour produire un défilement, de sorte qu'il peut être mis en fonctionnement pour déplacer progressivement la position de multiplexage d'une distance prédéterminée lors de chaque trame.

5. Appareil selon la revendication 4, dans lequel le moyen de commande d'affichage comprend un compteur d'affichage (68) contenant une seconde valeur de comptage définissant l'étendue de la partie sélectionnée de chaque trame dans laquelle une superposition est empêchée, le moyen d'inhibition de l'affichage étant destiné à générer le signal de commande (CLÉ) lorsque la valeur de comptage verticale est égale à la seconde valeur de comptage ; et dans lequel le moyen de commande d'affichage comprend un moyen pour incrémenter la seconde valeur de comptage pendant le défilement pour faire varier l'étendue de la partie sélectionnée de la distance prédéterminée lors de chaque trame.

6. Appareil selon l'une quelconque des revendications précédentes, dans lequel le signal d'image est sous la forme d'un signal de luminance (Y) et d'un signal de chrominance (C), le moyen générateur étant destiné à convertir la trame échantillonnée du signal d'entrée en des signaux de couleurs (R, V, B) sous forme numérique afin de constituer le signal d'image binarisé, le moyen générateur étant en outre destiné à lire le signal d'image binaire dans l'élément à mémoire et à convertir les signaux de couleurs en des signaux de luminance et de chrominance correspondant en forme au signal d'image d'entrée, de sorte que le moyen de multiplexage peut être mis en fonctionnement pour multiplexer les signaux de luminance et de chrominance du signal d'image d'entrée avec les signaux de luminance et de chrominance du signal d'image de titre.

7. Appareil selon la revendication 6, dans lequel le moyen de multiplexage peut être mis en fonctionnement pour fournir sélectivement en sortie soit les signaux de luminance et de chrominance du signal d'image, soit les signaux de luminance et de chrominance du signal d'image de titre, respectivement, le moyen de multiplexage pouvant être mis en fonctionnement pour fournir en sortie les signaux d'image de titre en réponse à un signal de commande de multiplexage (28), et le moyen de commande de multiplexage pouvant être mis en fonctionnement pour générer le signal de commande de multiplexage chaque fois que le signal d'image de titre est lu dans l'élément à mémoire sauf en cas d'inhibition par le signal de commande (CLÉ) généré par le moyen d'inhibition de l'affichage.

8. Procédé de traitement de signal d'image comprenant les étapes consistant à fournir en entrée un signal d'image correspondant à une zone d'image d'entrée (A) ;
échantillonner une composante de luminance d'une trame sélectionnée du signal d'image d'entrée, former à partir de celle-ci un signal d'image binarisé et stocker la composante de luminance binarisée de ladite trame sélectionnée dans un élément à mémoire (32), générer ensuite un signal d'image de titre de ladite trame sélectionnée en lisant la composante de luminance binarisée de ladite trame sélectionnée dans l'élément à mémoire, le signal d'image de titre de ladite trame sélectionnée étant représentatif d'une image de titre correspondant à une zone d'image de titre (C) plus petite que la zone d'image d'entrée ;
commander le cadencement du signal d'image d'entrée et la génération du signal d'image de titre ; et
multiplexer le signal d'image de titre de ladite trame sélectionnée avec un signal d'image d'entrée fourni ultérieurement en entrée audit moyen d'entrée et à fournir en sortie un signal d'image de sortie représentatif du signal d'image de titre superposé au signal d'image fourni en entrée ultérieurement à l'intérieur d'une zone d'image de sortie (B) qui est plus petite que la zone d'image d'entrée et plus grande que la zone d'image de titre ;
caractérisé en ce que l'étape de commande de cadencement consiste à commander une position de multiplexage (e ; c) de la zone d'image de titre par rapport à la zone d'image d'entrée et, dans un mode de défilement, à déplacer progressivement la position de multiplexage entre une position extérieure (e) à laquelle la zone d'image de titre est à l'extérieur de la zone d'image de sortie et une position intérieure (c) à laquelle la zone d'image de titre est à l'intérieur de la zone d'image de sortie ;
commander le cadencement de génération du signal d'image de titre au moyen d'un signal de remise à zéro pour chaque trame du signal d'image afin de déclencher la génération du signal d'image de titre en lisant le contenu de l'élément à mémoire en commençant à la même adresse de début de l'élément à mémoire pour chaque trame du signal d'image et à un instant correspondant à la position de multiplexage ; et
commander le cadencement de génération d'un signal de commande (CLÉ) pour inhiber le multiplexage du signal d'image de titre avec un signal d'image d'entrée pendant une partie sélectionnée de chaque trame afin d'éviter une superposition d'une partie indésirable de la zone d'image de titre sur la zone d'image de sortie du fait d'un chevauchement de la zone d'image de titre générée pour une trame adjacente.

9. Procédé selon la revendication 9, dans lequel l'élément à mémoire a une capacité de stockage d'une trame correspondant à la zone d'image de titre et plus petite qu'une capacité de stockage correspondant à la zone d'image de sortie.

10. Procédé selon l'une quelconque des revendications 8 et 9, dans lequel le cadencement est commandé par comptage d'impulsions d'horloge synchronisées avec chaque trame du signal d'image, de sorte que dans chaque trame, des valeurs de comptage horizontales et verticales respectives sont représentatives de positions horizontales et verticales dans la zone d'image d'entrée ;
la position de multiplexage étant commandée au moyen d'un compteur à remise à zéro (88) contenant une première valeur de comptage définissant la position de multiplexage et un moyen générateur de signal de remise à zéro (90, 92) générant le signal de remise à zéro lorsque la valeur de comptage verticale est égale à la première valeur de comptage.

11. Procédé selon la revendication 10, dans lequel la première valeur de comptage est incrémentée lors de chaque trame pour produire un défilement, déplaçant ainsi progressivement la position de multiplexage d'une distance prédéterminée lors de chaque trame.

12. Procédé selon la revendication 11, dans lequel l'inhibition d'une superposition indésirable est commandée au moyen d'un compteur d'affichage (68) contenant une seconde valeur de comptage définissant l'étendue de la partie sélectionnée de chaque trame dans laquelle une superposition est empêchée, le signal de commande (CLÉ) étant généré lorsque la valeur de comptage verticale est égale à la seconde valeur de comptage ; et la seconde valeur de comptage étant incrémentée pendant le défilement de façon à faire varier l'étendue de la partie sélectionnée de la distance prédéterminée lors de chaque trame.

13. Procédé selon l'une quelconque des revendications 8 à 12, dans lequel le signal d'image est sous la forme d'un signal de luminance (Y) et d'un signal de chrominance (C), la trame échantillonnée du signal d'entrée étant convertie en des signaux de couleurs (R, V, B) sous forme numérique afin de constituer le signal d'image binarisé, le signal d'image binaire étant lu dans l'élément à mémoire et les signaux de couleurs convertis en signaux de luminance et de chrominance correspondant en forme au signal d'image d'entrée, de sorte que l'étape de multiplexage consiste à multiplexer les signaux de luminance et de chrominance du signal d'image d'entrée avec les signaux de luminance et de chrominance du signal d'image de titre.

14. Procédé selon la revendication 13, dans lequel l'étape de multiplexage fournit sélectivement en sortie soit les signaux de luminance et de chrominance du signal d'image, soit les signaux de luminance et de chrominance du signal d'image de titre, respectivement, l'étape de multiplexage fournissant en sortie les signaux d'image de titre en réponse à un signal de commande de multiplexage (28), et le signal de commande de multiplexage étant généré chaque fois que le signal d'image de titre est lu dans l'élément à mémoire sauf en cas d'inhibition par le signal de commande (CLÉ) destiné à inhiber la superposition.
